# EUROPEAN PATENT SPECIFICATION

(11) **EP 2 689 652 B1**
(45) Date of publication and mention of the grant of the patent: **10.08.2016**
(21) Application number: 12789832.8
(22) Date of filing: 22.05.2012
(51) Int. Cl.: A01D 46/26

(54) **SYSTEM FOR PICKING OLIVES AND OTHER FRUITS**
SYSTEM ZUM PFLÜCKEN VON OLIVEN UND ANDEREN FRÜCHTEN
SYSTÈME PERMETTANT DE RÉCOLTER LES OLIVES ET D'AUTRES FRUITS

(30) Priority: 24.05.2011 ES 201100604
(43) Date of publication of application: 29.01.2014
(73) Proprietor: Canela Pérez, Carlos, 25270 Sant Guim de Freixenet (ES)
(72) Inventor: Canela Pérez, Carlos, 25270 Sant Guim de Freixenet (ES)
(74) Representative: Gallego Jiménez, José Fernando
(86) International application number: PCT/ES2012/070365
(87) International publication number: WO 2012/160231

(56) References cited:
- EP-A1- 0 427 170
- EP-A2- 2 119 340
- EP-A2- 2 119 340
- WO-A1-2004/057943
- WO-A1-2004/080159
- ES-T3- 2 275 850
- GR-B- 1 002 725
- US-A- 2 925 687
- US-A- 3 237 389
- US-A- 4 208 860
- US-A1- 2002 062 635
- US-A1- 2004 216 442
- US-B1- 6 378 282

## Description

### Object of the invention.

The present invention refers to a system for picking olives and other fruits, more specifically, to a system of the type comprising mechanically actionable means, intended to act on the branches of the tree, causing the olives or fruits to fall therefrom. This system presents the special feature of incorporating at least one shaft mounted so as to project from a supporting frame and that carries flexible elements to knock down the fruit, which are attached to driving means that are responsible for transmitting a limited alternately rotational motion, the said system allowing for the insertion of the shaft or shafts between the branches of the tree and knocking down the fruit therefrom by means of the knocking flexible elements.

### Application field of the invention.

This invention is applicable in the agricultural industry and more specifically in the manufacture of machinery for harvesting fruits such as olives, hazelnuts and the like.

### Background of the invention.

The collection of certain fruits such as olives or nuts is performed mainly by knocking down them. To perform this type of collection, nets are laid onto the ground around the trunk of the tree, covering the surface on which the crown of the tree extends, and by knocking or waving the branches using sticks or poles to cause the olives to fall. Once the tree has been knocked, nets accumulating the detached fruits and thin branches which tend to break and fall due to knocks are gathered.

This operational collection is very burdensome in terms of time and labour, since the laying and placement of nets requires laborious preparation. In addition, if the tree is large, the intervention of several operators for shaking the tree in a short time is required. Time is also spent in the manual work of picking up the fruits fallen on the nets, and carrying them to the trailer or vehicle used for their transportation.

Different devices are known for the optimisation of such collecting operations.

Thus, tools having at the ends of a stick or handle a kind of rake or a plurality of fingers of varying length, with which the branches are combed in order to cause the fall of the olives, are known. These utensils are slower than the traditional knocking down as branches are to be combed one by one.

In other cases, the tool comprises, at the end of a handle, a hook, with which the branch is held at a distance by the worker. Once the branch is held, it is waved by actuating the pole manually or by a vibrating mechanism associated therewith.

These tools, especially when driven by a vibrator, often cause damage to the branch hooking areas and have reduced effectiveness, as they only detach part of the fruits, being necessary to review the tree manually in order to collect the remaining fruits.

This system is less harmful to the tree, but it requires some skills by the worker who has to engage and disengage the different branches and handle the utensil.

Also known are devices comprising a frame attachable to a tractor and comprising a pair of jaws, like clamps, with which the tree trunk is firmly held. These clamps are connected to a high-power vibrator, such that considerable oscillations are applied to the tree, thus causing the fall of the olives or fruits in question. These oscillations applied to the tree trunk, not only fail to ensure that all the olives or fruits fall, but they also cause significant damage to tree roots, which can lead to their premature death, especially in the case of young trees.

In other cases, high power vacuum with very long hoses have been used, which allow for picking olives both from the tree and from the nets extended on the ground.

This system has the drawback that the holding and handling of the hose must be carried out manually, which is an important effort and discomfort for operators.

They are also known olive harvesters or collectors having a structure like a bridge for their driving over the rows of trees. These olive collectors have, on their internal side, vertical rollers carrying knocking elements acting on opposite sides of the trees and causing the fruit to fall.

These olive collectors have a very high cost and their use is limited to specific crops of great extension, since trees should form alignments and be subjected to specific pruning to control their growth, making it necessary to plant trees very close together in order to compensate this loss of growth, limiting the growth of the roots and requiring a specific treatment.

This problem is largely determined in that the knocking elements cannot access the interior of the tree, since their own branches avoid it, so they only act on the surface of the two opposite sides of the tree.

Therefore, the technical problem that arises is the development of a mechanical driving system, which is able to penetrate through the branches of the tree to detach the fruits therefrom, requiring minimal labour and which does not cause significant or irreparable damage to the tree.

The applicant of the present invention is not aware of prior art that satisfactorily resolve the issues presented.

GR1002725 discloses an equipment for the collection of olives comprising multiple beaters which are rotated in a first direction when they move towards the olives and in a second, opposite direction when they are removed away of the olives.

EP2119340 refers to a device for the harvesting of olive trees comprising rotating beating rods standing on girders of adjustable length and on a vertical curved girder for raising them. The beating rods are introduced into the tree and as they rotate, and the opposite action in driving means allows the exit of the beating rods from the tree to introduce them again in another part of the tree.

### Description of the invention

The system for picking olives and other fruits according to claim 1, object of this invention, has special technical features to allow for mechanical harvesting by accessing the interior of the tree, without damaging it and with minimal labour.

The system is of the type comprising mechanically operable means, intended to act on the tree branches, causing the olives and fruits to fall therefrom.

According to the invention, the system comprises:
- a frame provided with means for attachment to motor means for the movement and operation thereof.
- at least one shaft mounted so as to project and be able to rotate inside the aforementioned frame, and that can be inserted between tree branches; said shaft being provided with flexible or elastic elements to knock down the fruit and which are preferably placed near the free end thereof,
- means for actuating each of the shafts with an alternate rotational movement of limited amplitude around their respective longitudinal axis.

This system configuration allows for the closeness to the tree to be shaken, so that the projecting shaft or shafts are inserted between the branches of the tree and the knocking flexible elements knock the branches, thus causing the fruit to fall. The access of the knocking flexible elements within the tree is especially important to achieve the maximum collection of fruits and prevent such collection to be limited to the fruits that are located on the outer edges of the tree.

Another advantage of this system is that it can work on any kind of crop, since it does not require trees to form rows or to be arranged in a specific manner.

According to the invention, the frame is extended over a rear cavity, closed at the sides and top, opened at its rear end and having at its bottom means for collecting the fruit that are detached from the tree.

This system allows for carrying out the picking of olives with minimal labour, which can be limited to the driver or person in charge of managing the system or device.

Means for collecting the harvested fruits can be constituted by a net or by swing gates that allow for the subsequent discharge in a trailer or vehicle suitable for their transportation, thus making unnecessary to pick the olives from the ground or to handle them manually.

In one embodiment, the flexible elements consists of knocking rods that are helically wound about the shafts, forming a flexible portion and having at least one end radially projected with respect to said shafts, said radial ends being the responsible for knocking the branches when the alternately rotational motion of the shafts is produced.

The wound portion allows for the elastic deformation of the knocking flexible elements in case they contact a thick branch and do not cause significant damages or the breakage of the branch.

The drive means of the shafts can be different as long as they provide a limited alternately rotational movement to said shafts. According to the invention, said shaft driving means comprises: a multiple pulley vertically mounted on the frame by means of a shaft that is attachable to a motor element; short shafts mounted on the frame and provided with eccentrics attached to the multiple pulley through the corresponding belt and pulley; and a connecting rod driven by said eccentrics and articulated at radial arms fixed to the front end of the respective shafts carrying the knocking flexible elements. Said connecting rods transform the rotational movement of the eccentrics into an alternately rotational motion of the shafts.

Depending on the number of shafts included in the system, there is provided the use of intermediate rods articulated in the radial arms of adjacent shafts, so that they describe alternately rotational movements simultaneously.

The alternately rotational movement of the shafts, and consequently of the knocking shafts, has a limited amplitude.

### Description of figures.

In order to complement the description that is being carried out and with the purpose of facilitating the understanding of the characteristics of the invention, the present description is accompanied by a set of drawings wherein, by way of a non-limiting example, the following has been represented:

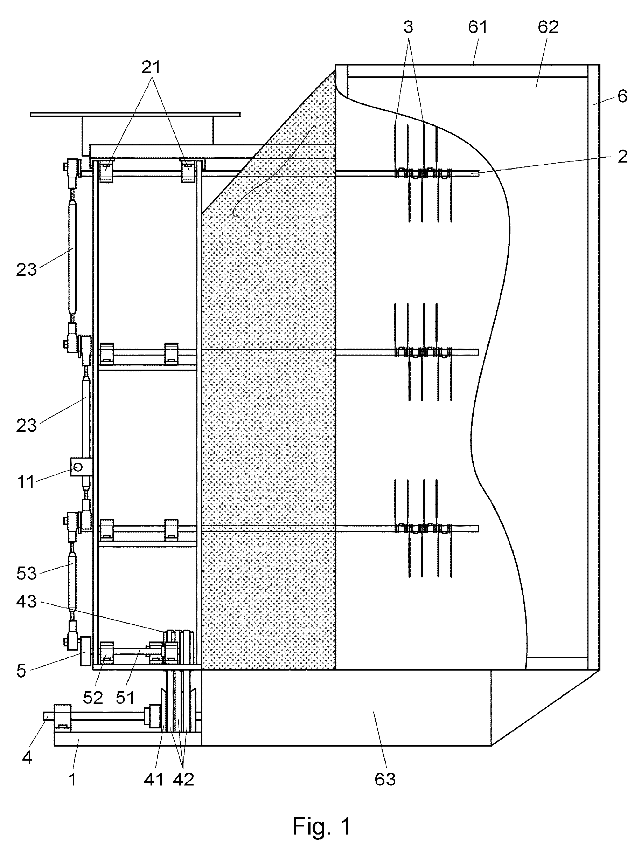

- Figure 1 shows a profile view of the system of the invention, partially sectioned to allow for the observation of the shafts carrying the knocking flexible elements.

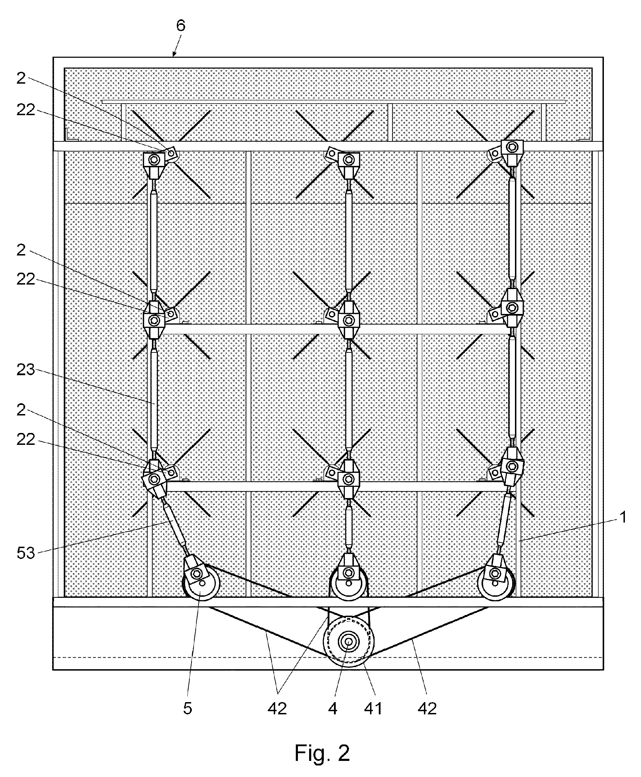

- Figure 2 shows an elevation view of the system at the front end of the frame, wherein the means for driving the shafts carrying the knocking flexible elements can be seen.

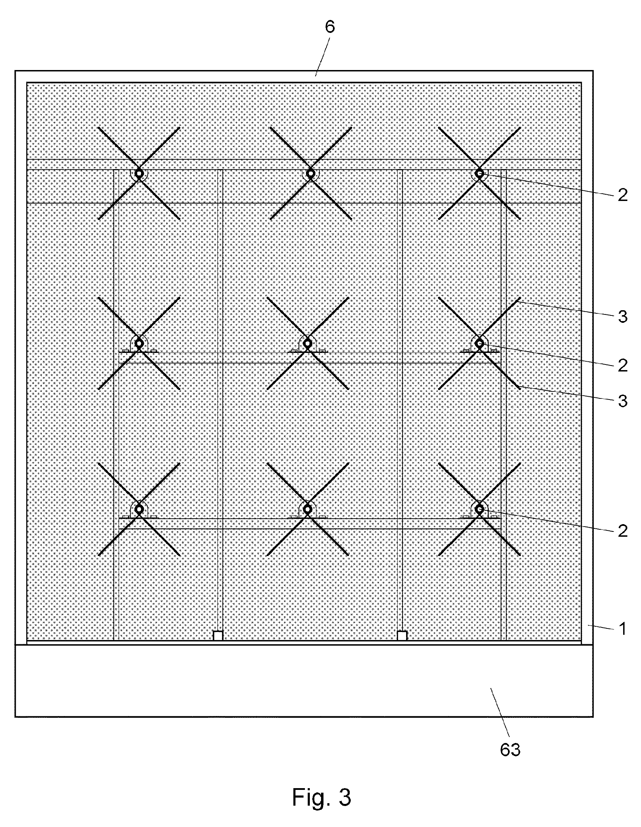

- Figure 3 shows an elevation view of the system at the rear end, corresponding to the open lateral of the rear cavity, and which allows the closeness of the system to the tree so that the shafts carrying the knocking flexible elements can act on the branches thereof.
- Figure 4 shows a perspective detail of the assembly of a knocking element on one shaft.

### Preferred embodiment of the invention.

As can be seen in the referenced figures, the system comprises a vertical frame (1) provided with lugs (11) conforming means to be attached to displacement motor means, such as a tractor.

On the frame (1) shafts (2) projecting backwards are rotatably mounted by means of pairs of bearings (21).

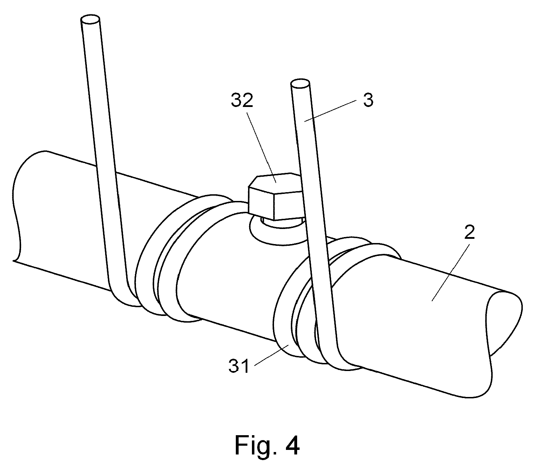

These shafts (2) have a plurality of flexible elements (3) for knocking the branches of the tree in order to cause the falling of the olives or fruits therefrom. As seen in Figure 4, each knocking flexible element (3) is formed as an elongated rod, which is helically wound about the shaft (2) that rotates alternately forming a flexible or elastic portion (31), attached to the shaft (2) by an intermediate screw (32).

The flexible portion (31) has two coiled halves of opposite rotation, and the two ends of the rod are radially projected relative to the corresponding shaft (2) to knock the branches during the alternate rotation of said shaft (2).

Each shaft (2) comprises several knocking flexible elements (3) to be able to knock and move all branches located around.

The shafts (2) have at the front end a radial arm (22), with the radial arms of the successive vertical shafts being associated by intermediate bars (23), so that they simultaneously describe an alternately rotational movement supplied by driving means that transform a continuous circular movement, for example supplied by the tractor power take-off, into an alternately rotational movement.

In the embodiment shown, the shaft driving means comprise a multiple pulley (41) mounted on the vertical frame by means of a shaft (4) that in this embodiment is engageable to the power take-off of a tractor, short shafts (51) that are mounted on the frame (1) via bearings (52) and coupled to the multiple pulley (41) through the corresponding pulley (43) and belt (42), with each short shaft (51) having an eccentric (5) which actuates a connecting rod (53) hinged to the radial arm (22) of the nearest shaft (2), in this case one of the shafts (2) taking the lower position in the frame (1).

The connecting rods (53) transforms the continuous circular movement of the respective eccentrics into an alternately rotational movement of the corresponding shafts (2), being said alternately rotational movement of limited amplitude, in this case of approximately 90 degrees.

The frame (1) extends over a rear cavity (6), which closes at the sides and at the top the space taken by the shafts (2) and that is opened at its rear end to allow for the closeness of the system to the tree so that the knocking flexible elements (3) can act on the branches thereof.

In the example shown, said rear cavity (6) is conformed by longitudinal beams (61) supporting a dense net (62), its mission being to prevent olives falling outside during the knocking down operation.

The rear cavity (6) has at its lower end a tray (63) for collecting the fruits detached from the tree during the knocking down.

## Claims

1. System for picking olives and other fruits, of the type comprising mechanically actuable means, intended to act on the branches of the tree, causing the olives or fruits to fall therefrom said system also comprising:
- a frame (1) provided with means for attachment to a motor means for movement and operation thereof,
- at least one cantilevered shaft (2) rotatable inside the aforementioned frame (1) and being inserted between the tree branches; said shaft (2) being provided with knocking elements (3) which are preferably placed near the free end thereof, **characterized in that** it also comprises:
- means for actuating each of the shafts (2) with an alternate rotational movement of limited amplitude around their respective longitudinal axis.

2. System according to claim 1, **characterized in that** said shaft/s is/are provided with elastic or flexible elements.

3. System according to claim 1, **characterized in that** the frame (1) extends forming a rear cavity (6) closed at the sides and at the top, open at its rear end and having at its bottom means for collecting the fruits detached from the tree.

4. System according to any of claims 2 or 2 plus 3, **characterized in that** the elastic or flexible knocking elements (3) are formed by helically wound rods on each of the shafts (1) forming a flexible portion (31) and having at least one end projecting radially with respect to said shafts (1).

5. System according to any of the preceding claims, **characterized in that** the means for actuating the shafts comprises a multiple pulley (41) mounted on the frame (1) through a shaft (4) which is attachable to a motor element; short shafts (31) mounted on the frame (1) provided with eccentric elements and coupled to the multiple pulley through corresponding pulley and belt; and connecting rods (53) actuated by said eccentric elements (5) and hinged to radial arms (22) fixed to the front end of the respective shafts (2) carrying the flexible knocking elements (3).

6. System according to claim 5, **characterized in that** the actuating means comprises intermediate bars (23) hinged to the radial arms (22) of adjacent shafts (2).

## Patentansprüche

1. System zum Pflücken von Oliven und anderen Früchten, der Art, die mechanisch antreibbare Mittel umfasst, die dazu vorgesehen sind, auf die Äste des Baums einzuwirken und die Oliven oder Früchte zu veranlassen, von diesen herabzufallen, wobei das System außerdem Folgendes umfasst:
- einen Rahmen (1), der mit Mitteln zum Anbringen an einem Motormittel für dessen Bewegung und Betrieb versehen ist,
- wenigstens eine Auslegerwelle (2), die in dem genannten Rahmen (1) drehbar ist und zwischen die Baumäste geführt wird; wobei die Welle (2) mit Stoßelementen (3) versehen ist, die vorzugsweise in der Nähe ihres freien Endes angeordnet sind, **dadurch gekennzeichnet, dass** es außerdem Folgendes umfasst:
- Mittel zum Antreiben der einzelnen Wellen (2) mit einer alternierenden Drehbewegung begrenzter Amplitude um ihre jeweilige Längsachse.

2. System nach Anspruch 1, **dadurch gekennzeichnet, dass** die Welle/n mit elastischen oder flexiblen Elementen versehen ist/sind.

3. System nach Anspruch 1, **dadurch gekennzeichnet, dass** der Rahmen (1) sich unter Bildung eines hinteren Hohlraums (6) erstreckt, der an den Seiten und an der Oberseite geschlossen ist, an seiner Rückseite offen ist und an seinem Boden Mittel zum Auffangen der vom Baum gelösten Früchte aufweist.

4. System nach einem der Ansprüche 2 oder 2 plus 3, **dadurch gekennzeichnet, dass** die elastischen oder flexiblen Stoßelemente (3) durch spiralförmig umwickelte Stäbe an den einzelnen Wellen (1) gebildet sind, die einen flexiblen Abschnitt (31) bilden und wenigstens ein Ende aufweisen, das in Bezug auf die Wellen (1) radial vorspringt.

5. System nach einem der vorangehenden Ansprüche, **dadurch gekennzeichnet, dass** die Mittel zum Antreiben der Wellen eine mehrfache Riemenscheibe (41), die durch eine Welle (4) an dem Rahmen (1) angebracht ist, die an einem Motorelement anbringbar ist; kurze Wellen (31), die an dem Rahmen (1) angebracht sind, mit exzentrischen Elementen versehen und durch entsprechende Riemenscheibe und Riemen an die mehrfache Riemenscheibe gekoppelt sind; und Verbindungsstangen (53) umfassen, die durch die exzentrischen Elemente (5) angetrieben werden und drehbar an radialen Armen (22) angebracht sind, die am vorderen Ende der jeweiligen Wellen (2) befestigt sind, die die flexiblen Stoßelemente (3) tragen.

6. System nach Anspruch 5, **dadurch gekennzeichnet, dass** die Antriebsmittel Zwischenschienen (23) umfassen, die drehbar an den radialen Armen (22) benachbarter Wellen (2) angebracht sind.

## Revendications

1. Système permettant de récolter les olives et autres fruits, du type comprenant des moyens pouvant être actionnés mécaniquement, destiné à agir sur les branches de l'arbre, en en faisant tomber les olives ou les fruits, ledit système comprenant également :
- un châssis (1) munis de moyens destinés à être fixés sur un moteur, de moyens de déplacement et de fonctionnement de celui-ci,
- au moins un axe en porte-à-faux (2) pouvant pivoter à l'intérieur du bâti susmentionné (1) et introduit entre les trois branches ; ledit axe (2) étant munis d'éléments de gaulage (3) qui sont placés de préférence près de l'extrémité libre de celui-ci, **caractérisé en ce qu'**il comprend également :
- des moyens d'actionnement de chacun des axes (2) avec un mouvement giratoire alternatif d'amplitude limitée autour de leur axe longitudinal respectif.

2. Système selon la revendication 1, **caractérisé en ce que** ledit/lesdits axe/s est/sont muni/s d'éléments élastiques ou souples.

3. Système selon la revendication 1, **caractérisé en ce que** le bâti (1) s'étend en formant une cavité arrière (6) fermée sur les côtés et au niveau de la partie supérieure, ouverte sur son côté arrière et ayant au niveau de sa partie inférieure des moyens permettant de cueillir les fruits détachés de l'arbre.

4. Système selon l'une quelconque des revendications 2 ou 2 et 3, **caractérisé en ce que** les éléments de gaulage élastiques ou souples (3) sont formés de tiges enroulées en hélice sur chacun des axes (1) formant une partie flexible (31) et ayant au moins une extrémité qui fait saillie radialement par rapport auxdits axes (1).

5. Système selon l'une quelconque des revendications précédentes, **caractérisé en ce que** le moyen d'actionnement des axes comprend une poulie multiple (41) montée sur le bâti (1) au moyen d'un axe (4) qui peut être fixé sur un élément de moteur ; des axes courts (31) montés sur le bâti (1) munis d'éléments excentriques et couplés à la poulie multiple au moyen d'une poulie et d'une courroie correspondantes ; et des bielles (53) commandées par lesdits éléments excentriques (5) et articulés à des bras radiaux (22) fixés sur l'extrémité avant des axes respectifs (2) portant les éléments de gaulage flexibles (3).

6. Système selon la revendication 5, **caractérisé en ce que** le moyen d'actionnement comprend des barres intermédiaires (23) articulées aux bras radiaux (22) d'axes adjacents (2).
